(19) Europäisches Patentamt
European Patent Office
Office européen des brevets

(11) **EP 2 717 042 B1**

(12) **EUROPEAN PATENT SPECIFICATION**

(45) Date of publication and mention
of the grant of the patent:
**30.12.2015 Bulletin 2015/53**

(51) Int Cl.:
***G01N 27/72*** *(2006.01)*   ***G01N 27/82*** *(2006.01)*
***G01N 27/90*** *(2006.01)*

(21) Application number: **12792753.1**

(86) International application number:
**PCT/JP2012/063341**

(22) Date of filing: **24.05.2012**

(87) International publication number:
**WO 2012/165296 (06.12.2012 Gazette 2012/49)**

(54) **MAGNETIC PROPERTY MEASUREMENT METHOD AND MAGNETIC PROPERTY MEASUREMENT DEVICE**

VERFAHREN ZUR MESSUNG VON MAGNETEIGENSCHAFTEN UND VORRICHTUNG ZUR MESSUNG VON MAGNETEIGENSCHAFTEN

PROCÉDÉ DE MESURE DE PROPRIÉTÉ MAGNÉTIQUE ET DISPOSITIF DE MESURE DE PROPRIÉTÉ MAGNÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2011   JP 2011120331
19.04.2012   JP 2012095800**

(43) Date of publication of application:
**09.04.2014   Bulletin 2014/15**

(73) Proprietor: **JFE Steel Corporation
Tokyo 100-0011 (JP)**

(72) Inventors:
• **NISHIZAWA, Yuji
Chiyoda-ku, Tokyo 100-0011 (JP)**
• **HARAZONO, Manabu
Chiyoda-ku, Tokyo 100-0011 (JP)**
• **OKADA, Norihisa
Chiyoda-ku, Tokyo 100-0011 (JP)**
• **YOTSUJI, Junichi
Chiyoda-ku, Tokyo 100-0011 (JP)**

(74) Representative: **Hoffmann Eitle
Patent- und Rechtsanwälte PartmbB
Arabellastraße 30
81925 München (DE)**

(56) References cited:
**JP-A- 2001 056 317      JP-A- 2009 074 813
JP-A- 2010 054 254      JP-Y2- 2 598 948**

**Description**

Field

The present invention relates to a magnetic properties measuring method and a magnetic properties measuring device that measure local magnetic properties distribution of a steel sheet (or a steel plate). Background
In a manufacturing process of steel sheets, to evaluate and manage the properties of steel sheets, local magnetic properties distribution of the steel sheets is often measured by using electromagnetism. The local magnetic properties distribution means to include not only the distribution of magnetic properties such as coercivity, permeability, and iron loss, but also variation in detecting electromagnetism due to flaws and inclusions on the surface or inside of the steel sheet. Consequently, a magnetic properties measuring device using electromagnetism can be applied to eddy-current testing, magnetic leakage flux testing, and others.
An issue common to magnetic properties measuring devices using electromagnetism includes that a detection signal is very sensitive to the fluctuation in the distance between a detection element and an object to be measured (hereinafter referred to as the amount of liftoff). In general, the smaller the amount of liftoff is, the more desirable it is, and the smaller the amount of fluctuation thereof is, the more desirable it is. As for the cause of the fluctuation in the amount of liftoff, known are the fluctuation in tension of a steel sheet, the eccentricity of a conveying roll, a shape defect of the steel sheets, and others. The fluctuation in the amount of liftoff due to the foregoing causes may be reduced to a certain extent by adding a support roll and others. However, it is difficult to avoid the fluctuation in the amount of liftoff when used in continuous measuring line of steel sheet, for example.
For example, with a steel sheet of a thin thickness, a shape defect area what is called edge deformation is likely to occur at an edge area of the steel sheet. In the area in which the edge deformation occurred, the steel sheet vibrates in an up-and-down direction in a short cycle by an extent of a few millimeters. The amount of liftoff fluctuates along with the vibration, and thus the detection signal also fluctuates. However, the fluctuation in the detection signal has no relation to the properties of a steel strip. As a consequence, when the magnetic properties of a steel sheet that includes edge deformation is measured, the amount of liftoff fluctuates by the influence of the edge deformation and thus a normal area may be falsely recognized as a defect area, or in contrast, a defect area may be determined as a normal area.
Therefore, various techniques have been suggested to suppress the fluctuation in the amount of liftoff. For example, Patent Literature 1 discloses a technique in which sensors are installed into a floating boat which has a copying mechanism by air pressure. Furthermore, Patent Literature 2 discloses a technique to improve the accuracy of flaw detection by using an eddy-current distance sensor to correct the fluctuation of liftoff caused by eccentricity and such. Patent Literature 3 discloses a technique that measures the amount of liftoff between a detection sensor and a specimen, and enables the measurement without the influence of skew of the specimen. Patent Literature 4 discloses a technique to correct the amount of liftoff at the time of flaw detection with a head which includes multiple distance measuring devices.

Citation List

Patent Literature

   Patent Literature 1: Japanese Utility Model Application Laid-open No. 61-170068
   Patent Literature 2: Japanese Patent Application Laid-open No. 2007-057245
   Patent Literature 3: Japanese Patent Application Laid-open No. 8-145952
   Patent Literature 4: Japanese Patent Application Laid-open No. 2001-056317

Summary

Technical Problem

However, the techniques disclosed in Patent Literature 1 to 4 have the following drawbacks. More specifically, according to the technique disclosed in Patent Literature 1, providing an appropriate copying mechanism on a detection head may be able to absorb the fluctuation in the amount of liftoff when the amount of liftoff fluctuates over the full width of the steel sheet. However, the fluctuation in the amount of liftoff caused by a local shape defect of the steel sheet such as edge deformation often affects only a part of detection elements, and thus the fluctuation in the amount of liftoff may not be cancelled in many cases. Meanwhile, all of the techniques disclosed in Patent Literature 2 to 4 correct the amount of liftoff with reference to a signal of a normal area with no defects. Such techniques are useful for the measuring methods in which the variation in output compared with the output of the area with no defects is detected as a defect as in eddy-current testing and in magnetic leakage flux testing. However, such techniques may be inadequate when evaluating the properties of products or grading the products based on the level of the measured signal, such as the measurement of magnetic properties. This is because some of the magnetic properties may not exhibit linear behavior with respect to the amount of liftoff and the sensitivity drift of the detection element and others may occur due to secular change.

In view of the situation in the foregoing, an object of the present invention is to provide a magnetic properties measuring method and a magnetic properties measuring device that stably measure local magnetic properties distribution of a steel sheet even when the fluctuation in the amount of liftoff occurs.

Solution to Problem

To solve the problem described above and achieve the object, a magnetic properties measuring method according to the present invention includes the steps of: obtaining relation of output of a magneto-sensitive element and an amount of liftoff of the magneto-sensitive element at a normal area of a pre-measuring specimen as normal area liftoff data beforehand; obtaining relation of the output of the magneto-sensitive element and the amount of liftoff of the magneto-sensitive element at a defective area of the pre-measuring specimen as defective area liftoff data beforehand; measuring output of the magneto-sensitive element at a specimen and the amount of liftoff of the magneto-sensitive element when the output is obtained; and performing correction calculation on the output of the magneto-sensitive element measured at the measuring step using the normal area liftoff data, the defect area liftoff data, and the amount of liftoff measured at the measuring step.

To solve the problem described above and achieve the object, a magnetic properties measuring device according to the present invention includes: an excitation element that magnetizes a specimen; a magneto-sensitive element that detects magnetic properties distribution on the specimen induced by the excitation element; a distance measuring device that measures an amount of liftoff between the magneto-sensitive element and the specimen; a storage device that stores therein normal area liftoff data that represents relation of output of the magneto-sensitive element and the amount of liftoff of the magneto-sensitive element at a normal area, and defect area liftoff data that represents relation of the output of the magneto-sensitive element and the amount of liftoff of the magneto-sensitive element at a defect area; and a calculating device that corrects the output of the magneto-sensitive element using the normal area liftoff data, the defect area liftoff data, and the amount of liftoff measured with the distance measuring device.

Advantageous Effects of Invention

The magnetic properties measuring method and the magnetic properties measuring device according to the invention can stably measure local magnetic properties distribution of a steel sheet even when the fluctuation in the amount of liftoff occurs.

Brief Description of Drawings

FIG. 1 is a schematic block diagram illustrating a configuration of a magnetic properties measuring device according to an embodiment of the present invention.
FIG. 2 is a schematic diagram illustrating an example of a configuration of a detection head in the embodiment of the present invention.
FIG. 3 is a conceptual graphic chart illustrating the principle of liftoff amount correction in the embodiment of the present invention.
FIG. 4 is a schematic diagram illustrating an example of sampling a pre-measuring specimen in the embodiment of the present invention.
FIG. 5 is a graphic chart illustrating an example of local magnetic properties of a thin steel sheet including a shape defect area measured with an AC magnetic field applied to the steel sheet.
FIG. 6 is a graphic chart illustrating the relation of the output of a magneto-sensitive element on which liftoff amount correction is not performed and the amount of liftoff in the embodiment of the present invention.
FIG. 7 is a graphic chart illustrating the relation of the output of the magneto-sensitive element on which the liftoff amount correction is performed and the output of the magneto-sensitive element on which the liftoff amount correction is not performed in the embodiment of the present invention.
FIG. 8 is a graphic chart illustrating the relation of the output of the magneto-sensitive element before and after the liftoff amount correction and the amount of liftoff with a steel strip that includes defect areas. Description of Embodiments

With reference to the accompanying drawings, a magnetic properties measuring method and a magnetic properties measuring device according to an embodiment of the present invention will be described hereinafter. The invention, however, is not intended to be restricted by the embodiment. Furthermore, in the description of the drawings, the same constituents are illustrated with the same reference signs.

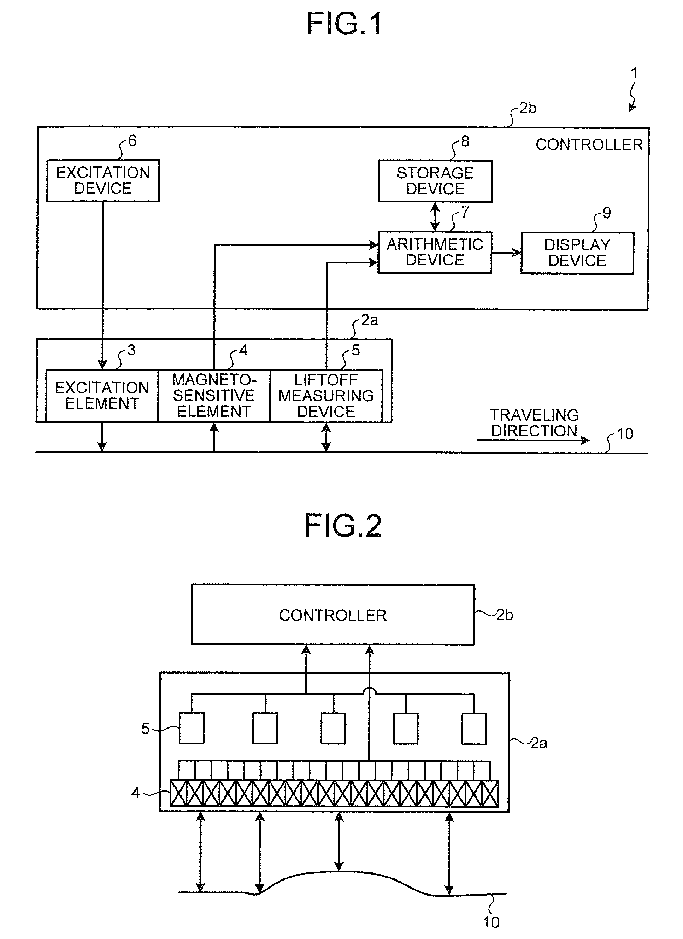

FIG. 1 is a schematic block diagram illustrating a configuration of the magnetic properties measuring device in the embodiment of the present invention. As illustrated in FIG. 1, a magnetic properties measuring device 1 includes a detection head 2a and a controller 2b. The detection head 2a includes an excitation element 3, magneto-sensitive elements 4, and distance measuring devices 5, and the controller 2b includes an excitation device 6, a calculating device 7, a storage device 8, and a display device 9.

The excitation element 3 is a device to magnetize a specimen 10, and can be configured with a coil or the like. The magnetic field that the excitation element 3 applies can be an AC magnetic field, a DC magnetic field, or a combination of both. While the excitation element 3 is provided inside the detection head 2a in the example illustrated in FIG. 1, the excitation element 3 may be provided on the opposite side of the detection head 2a with respect to the specimen 10. When the AC magnetic field and the DC magnetic field are used in combination, the excitation element 3 may be provided both inside of the detection head 2a and on the opposite side thereof.

The magneto-sensitive elements 4 are devices to detect magnetic properties distribution on the surface or inside of the specimen 10, and a commonly-used magnetic sensor such as a coil and a hall element can be used. In the description of the invention, the surface of the specimen 10 is defined to include the surface neighborhood of the specimen 10. In magnetic leakage flux testing, flaws will be detected by detecting leakage flux from the surface of specimen 10, and the invention can even be applied to the measurement to detect the magnetic field of such surface neighborhood.

As for the magneto-sensitive elements 4, it is preferable to make the distance from the specimen 10 (more specifically, the amount of liftoff) as small as possible in terms of detection performance. On the other hand, when the amount of liftoff is too small, the detection head 2a has a risk of contacting the specimen 10 due to vibration and a shape defect of the specimen 10. When the detection head 2a contacts the specimen 10, there is a risk of damaging the head and scratching or fracturing of the specimen or the steel sheet, and thus it is necessary to keep a safe gap. Consequently, the standard of liftoff amount is determined by the detection performance and a constraint condition such as properties of the steel sheet.

The distance measuring devices 5 are placed close to the magneto-sensitive elements 4, and measure the amount of liftoff. As for the distance measuring devices 5, a commonly-used distance meter, such as a laser distance meter can be used. The advantages of the laser distance meter used as the distance measuring devices 5 are that the measurement spot is small, a distance can be measured precisely and the interference with the adjacent distance measuring devices or with the magneto-sensitive elements 4 is small.

The excitation device 6 supplies an alternating current or a direct current to the excitation element 3 so as to excite the excitation element 3. While the excitation device 6 is provided inside the controller 2b in the example illustrated in FIG. 1, the excitation device 6 may be provided separately from the controller 2b.

The calculating device 7 uses the output of the distance measuring devices 5 to correct the output of the magneto-sensitive elements 4. The calculating device 7 corrects the output of the magneto-sensitive elements 4 by referring to the data of the relation between the sensor output in the normal area and the amount of liftoff and the data of the relation between the sensor output in the defect area and the amount of liftoff which are measured beforehand and stored in the storage device 8. Consequently, at the time of measuring data beforehand, the calculating device 7 stores the output of the magneto-sensitive elements 4 and the distance measuring devices 5 to the storage device 8.

The calculating device 7 sends the corrected output of the magneto-sensitive elements 4 to the display device 9. The display device 9 displays the detection result in an appropriate form. The calculating device 7 may, in place of displaying the detection result on the display device 9, store the detection result in the storage device 8.

FIG. 2 is a schematic diagram illustrating an example of a configuration of the detection head 2a in the embodiment of the present invention. The configuration example of the detection head 2a illustrated in FIG. 2 is an example of the detection head 2a including 20 pieces of the magneto-sensitive elements 4 and five pieces of the distance measuring devices 5. While it is desirable that a single distance measuring device 5 be provided for a single magneto-sensitive element 4, it is permissible even when the number of the distance measuring devices 5 is smaller than the number of the magneto-sensitive elements 4 depending on the shape and such of the specimen 10.

When the number of the distance measuring devices 5 is made smaller than that of the magneto-sensitive elements 4 as in the configuration example of the detection head 2a illustrated in FIG. 2, it is necessary to appropriately interpolate the amount of liftoff for the magneto-sensitive element 4 not accompanied with the distance measuring device 5. For example, weighting and interpolating the values of the distance between the distance measuring device 5 and the specimen 10 from the two adjacent distance measuring devices 5 can define the amount of liftoff for the magneto-sensitive element 4 that is not accompanied with the distance measuring device 5. When the shape variation is steep, the use of high-degree polynomial interpolation is suggested. The above-described interpolation calculation is performed by the calculating device 7 in the controller 2b.

The distance measuring devices 5 in the detection head 2a are preferable to be densely setup in the area in which a shape defect is likely to occur (for example, an edge area of the specimen 10) to ensure the accuracy of liftoff amount measurement. Meanwhile, in the area in which a shape defect is not likely to occur, the layout density of the distance measuring devices 5 can be reduced. Consequently, a necessary layout density of the distance measuring devices 5 can be ensured while a total cost is reduced.

Next, a magnetic properties measuring method with the foregoing configuration example of the magnetic properties measuring device 1 will be described.

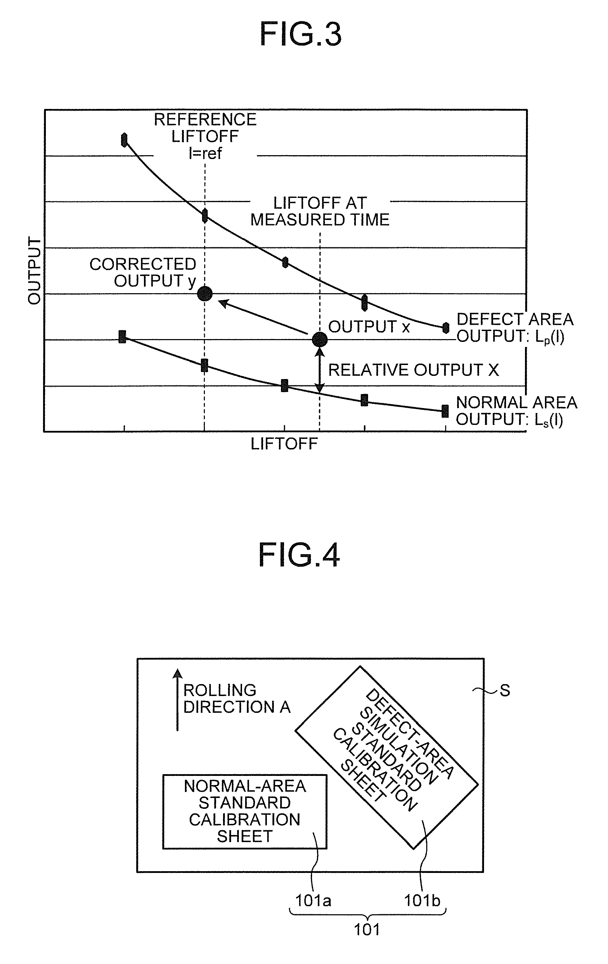

FIG. 3 is a conceptual graphic chart illustrating the principle of liftoff amount correction in the embodiment of the present invention. As illustrated in FIG. 3, the liftoff amount correction in the embodiment of the present invention uses the relation $L_s(l)$ of the output and the amount of liftoff at a normal area, and the relation $L_p(l)$ of the output and the amount of liftoff at a defect area which are measured beforehand.

In the example illustrated in FIG. 3, the output at the normal area and at the defect area drop as the amount of liftoff increases. While the relation of the output and the amount of liftoff differs according to the principle and the method of measurement, as long as the relation $L_s(l)$ of the output and the amount of liftoff at a normal area and the relation $L_p(l)$ of the output and the amount of liftoff at a defect area are obtainable beforehand, the magnetic properties measuring method in the embodiment of the present invention can be performed appropriately.

As a method to obtain the relation $L_s(l)$ of the output and the amount of liftoff at a normal area and the relation $L_p(l)$ of the output and the amount of liftoff at a defect area beforehand, there is a method in which a pre-measuring specimen is prepared and the pre-measuring specimen is measured using the magnetic properties measuring device 1. With the pre-measuring specimen (a normal-area standard calibration sheet and a defect-area simulant standard calibration sheet that simulates a defect area), the calibration is performed to appropriately determine the sensitivity of the magnetic properties measuring device 1 and a threshold of detecting a normal area and a defect area.

Generally, in eddy-current testing and in magnetic leakage flux testing, an artificial defect such as a drilled hole can be used as a defect area. Furthermore, a calculated result of electromagnetic field distribution around a defect by computer simulation and such can also be used. However, a magnetic-properties defect area that is different in the direction of magnetization from a normal area often differs in properties such as crystal grain size and crystal orientation from the normal area. Consequently, it is difficult to simulate a magnetic-properties defect area that is different in the direction of magnetization from a normal area with an artificial defect such as a drill hole.

Furthermore, for example, it is not easy to sample a defect-area simulant standard calibration sheet from a magnetic-properties defect area of a product. This is because a defect area occurs due to mismatch of manufacturing condition and such and is not intentionally made, and thus a normal area and the defect area may be mixed and the degree of defect may vary. Moreover, the size of the defect area is not always constant. As in the foregoing, the fortuity cannot be ruled out when sampling a defect-area simulation standard calibration sheet from a defect area of the actual steel sheet, and thus it is difficult to produce a pre-measuring specimen of a size appropriate for the calibration of the magnetic properties measuring device.

Consequently, in the present invention, a pre-measuring specimen is produced by focusing the difference in crystal orientation between a normal area and a defect area that is different in magnetic properties from the normal area. FIG. 4 is a schematic diagram illustrating a sampling method of a pre-measuring specimen. As illustrated in FIG. 4, the invention samples a normal-area standard calibration sheet 101a and a defect-area simulation standard calibration sheet 101b by cutting them out from the same normal steel sheet S by varying a cutting angle using a shearing machine or the like. At that time, selecting the angle to sample the defect-area simulation standard calibration sheet 101b from the steel sheet S allows the degree of defect of the defect-area simulation standard calibration sheet 101b to be arbitrarily selected.

As one example, when a normal-area standard calibration sheet is taken along a rolling direction A of a steal sheet and the angle is selected to maximize the difference in magnetic properties with respect to the normal-area standard calibration sheet, the degree of defect of the defect-area simulation standard calibration sheet 101b is maximized. More specifically, when the normal-area standard calibration sheet 101a is made by selecting a direction ([100] direction) in which an easy axis of magnetization is dominant and the defect-area simulation standard calibration sheet 101b is made by selecting a direction ([111] direction) in which a hard axis of magnetization is dominant, the degree of defect of the defect-area simulation standard calibration sheet 101b is maximized.

When the angle to sample the defect-area simulation standard calibration sheet 101b is selected within a range from 0° with respect to the direction of the easy axis of magnetization to 54.7° corresponding to the direction in which the hard axis of magnetization is dominant, the degree of defect can be arbitrarily selected. The degree of defect of the defect-area simulation standard calibration sheet 101b is determined based on a threshold by which a defect is determined.

As in the foregoing, when the angle of sampling from a steal sheet is varied for the normal-area standard calibration sheet 101a and for the defect-area simulation standard calibration sheet 101b, the crystal orientation can be effectively altered so as to vary the degree of defect. Furthermore, in accordance with this method, selecting only the angle of sampling from a steel sheet can produce the defect-area simulation standard calibration sheet 101b, and thus the reproducibility of defect area is high. Moreover, it is clear that there is no restriction in the size of the defect-area simulation standard calibration sheet 101b to produce.

The method is not restricted to separately cut out the normal-area standard calibration sheet 101a and the defect-area simulation standard calibration sheet 101b as a pre-measuring specimen 101 beforehand. For example, when calibration is performed using the pre-measuring specimen 101, only rotating the normal-area standard calibration sheet 101a can make it as the defect-area simulation standard calibration sheet 101b. In that case, mounting the pre-measuring specimen 101 to be rotatable at a predetermined angle with respect to the magnetic properties measuring device 1 allows the relative angle of the magnetic properties measuring device 1 and the pre-measuring specimen 101 to be altered to vary the effective crystal orientation. Consequently, a single steel sheet (the pre-measuring specimen 101) can implement both the normal-area standard calibration sheet 101a and the defect-area simulation standard calibration sheet 101b.

In the magnetic properties measuring method in the embodiment of the present invention, the normal-area standard calibration sheet 101a is used to obtain the relation $L_s(l)$ of the output and the amount of liftoff at the normal area. As one example of the obtaining method, the output is recorded while the liftoff is altered using appropriate spacers. Likewise, the defect-area simulation standard calibration sheet 101b is used to obtain the relation $L_p(l)$ of the output and the amount of liftoff at the defect area. This obtains the relation as illustrated in FIG. 3. The output of the magneto-sensitive element 4 is then corrected in the following manner.

Suppose that, when the amount of liftoff is 1 at the time of measurement measured with the distance measuring device 5, the output of the magneto-sensitive element 4 is x. The relative output X in this case is defined by the following Expression 1. The relative output X means the relative output of the magneto-sensitive element 4 when the output of the magneto-sensitive element 4 at the normal area (normal area output) is assumed to be 0 and the output of the magneto-sensitive element 4 at the defect area (defect area output) is assumed to be 1. More specifically, the relative output X varies in response to the degree of defect.

$$X = \frac{x - L_s(l)}{L_p(l) - L_s(l)} \qquad (1)$$

Next, using the relative output X, an output value at a reference liftoff amount l=ref is calculated as corrected output y. While the method to select a reference value ref of the liftoff amount is optional, for example, an initial value of the liftoff amount or a mode value in the actual measurement can be selected. When the normal area output and the defect area output at the reference liftoff amount l=ref are defined as $L_s(ref)$ and $L_p(ref)$, respectively, the corrected output y can be expressed by the following Expression 2. Performing such correction enables the output to be obtained corresponding to the degree of defect even when the amount of liftoff fluctuates, and thus the measurement of high precision can be made.

$$y = X \times \left( L_p(ref) - L_s(ref) \right) + L_s(ref) \qquad (2)$$

Next, the following describes the effects of the magnetic properties measuring method and the magnetic properties measuring device in the above-described embodiment of the present invention.

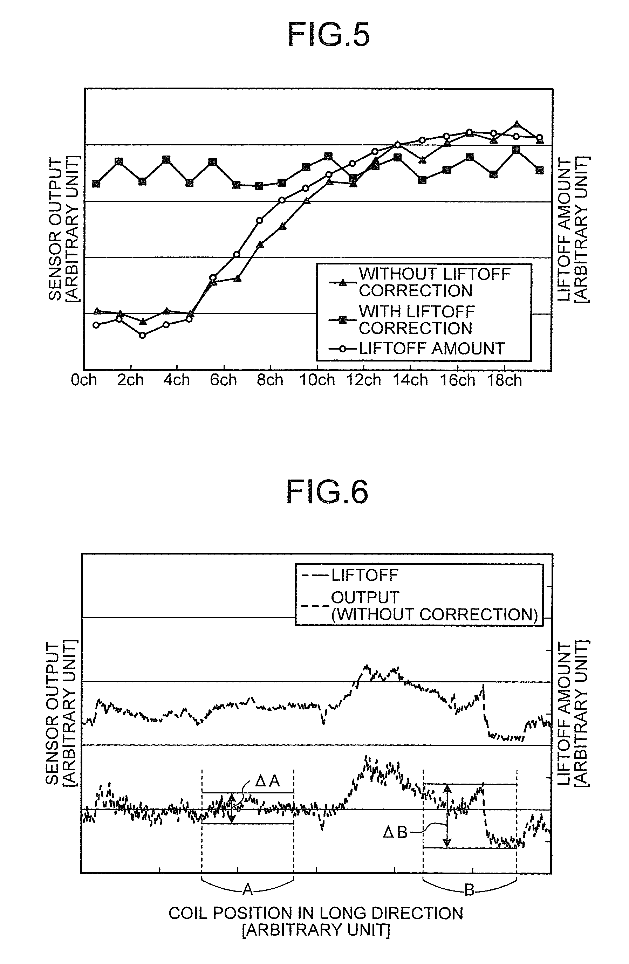

FIG. 5 is a graphic chart illustrating an example of local magnetic properties of a thin steel sheet, which includes a shape defect area, measured with an AC magnetic field applied to the steel sheet. The graphic chart illustrated in FIG. 5 indicates the output of the respective channels (20 channels (20ch) total) of the magneto-sensitive elements 4 before and after the liftoff correction in the embodiment of the present invention together with the amount of liftoff of the respective magneto-sensitive elements 4 at the time of the measurement. The left axis indicates the value of the output of the magneto-sensitive element 4 before and after the liftoff correction, and the right axis indicates the value of the amount of liftoff of the magneto-sensitive element 4.

The magneto-sensitive elements 4 in 20 channels in the example of the magnetic properties measurement illustrated in FIG. 5 are aligned in the width direction of the thin steel sheet. Consequently, the horizontal axis (axis of ch) of the graphic chart illustrated in FIG. 5 represents the detected magnetic signal in the width direction of the thin steel sheet. As the graphic chart illustrated in FIG. 5 shows, when a difference in the amount of liftoff occurs in the width direction of the thin steel sheet due to the edge deformation or the like on the thin steel sheet, the output of the magneto-sensitive element 4 lowers in correlation with the amount of liftoff. However, the magnetic properties measurement in the embodiment of the present invention shows that the differences in the amount of liftoff among the channels are corrected and the output of the magneto-sensitive element 4 is flattened.

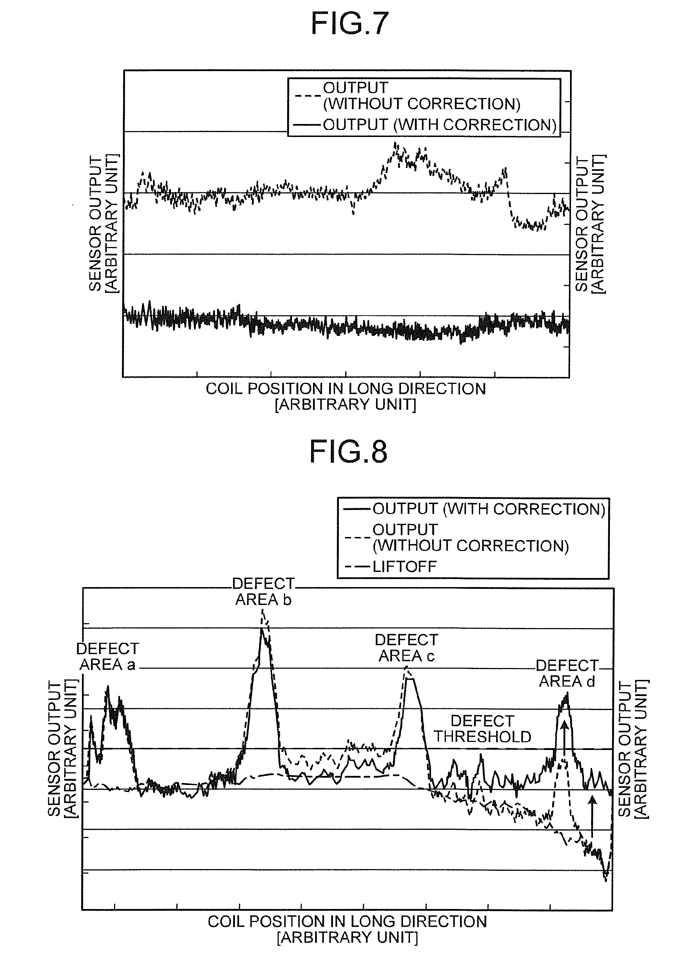

Next, with reference to FIGS. 6 and 7, an example of correcting the fluctuation in the amount of liftoff concerning the steel strip in the long direction will be described.

FIG. 6 is a graphic chart illustrating the relation of the output of the magneto-sensitive element 4, on which the liftoff correction is not performed, and the amount of liftoff in the embodiment of the present invention. In FIG. 6, the left axis indicates the value of the output of the magneto-sensitive element 4 (a broken line in the graphic chart) and the right axis indicates the amount of liftoff (a dashed-dotted line in the graphic chart). As illustrated in FIG. 6, the fluctuation in the amount of liftoff and the output of the magneto-sensitive element 4 have a very strong correlation with each other. For example, in FIG. 6, when the fluctuation in the output of the magneto-sensitive element 4 is compared between an interval A in which the fluctuation in the amount of liftoff is relatively small and an interval B in which the fluctuation in the amount of liftoff is large, the fluctuation $\Delta_B$ in the output of the magneto-sensitive element 4 at the interval B is greater than the fluctuation $\Delta_A$ in the output of the magneto-sensitive element 4 at the interval A. As a result, at the interval in which the fluctuation in the amount of liftoff is large, the fluctuation in the output of the magneto-sensitive element 4 caused by a defect area is buried in the fluctuation caused by the fluctuation in the amount of liftoff, thereby leading to a false detection of defect. FIG. 7 is a graphic chart illustrating the relation of the output of the magneto-sensitive element 4 on which the liftoff correction is performed and the output of the magneto-sensitive element 4 on which the liftoff correction is not performed in the embodiment of the present invention. In FIG. 7, the left axis indicates the value of the output of the magneto-sensitive element 4 after the correction (a solid line in the graphic chart) and the right axis indicates the value of the output of the magneto-sensitive element 4 before the correction (a broken line in the graphic chart). As illustrated in FIG. 7, the fluctuation in the output of the magneto-sensitive element 4 is reduced by the liftoff correction in the embodiment of the present invention.

Next, with reference to FIG. 8, described will be a method to distinguish a defect area from measured data in the magnetic properties measuring method according to the embodiment of the present invention.

FIG. 8 is a graphic chart illustrating the relation of the output of the magneto-sensitive element 4 before and after the liftoff correction and the amount of liftoff with a steel strip that includes defect areas. FIG. 8 graphs the measured data for the steel strip that includes four defect areas from a defect area "a" up to a defect area "d". As illustrated in FIG. 8, at the defect area "d", the sensor output is lowered along with the fluctuation in the amount of liftoff. Consequently, because the sensor output is below a defect threshold (a threshold to determine a defect), the defect area "d" is not detected even though it is a defect area. However, in the liftoff correction according to the embodiment of the present invention, the sensor output for the defect area "d" comes to exceed the threshold, and thus the defect area "d" can be correctly detected.

As a result of the foregoing, it has been confirmed that the measurement can be performed with the influence of the fluctuation in the amount of liftoff eliminated by the liftoff correction in the embodiment of the present invention. Use of this correction enables the output to be corrected over the full length and full width of the steel sheet, and thus enables to suppress the influence of disturbance that is the fluctuation in the amount of liftoff. Furthermore, the liftoff correction in the embodiment of the present invention can be applied, not only to the detection of magnetic properties defect area, but also to the measurement of iron loss, permeability, coercivity, or mechanical properties having correlation with the foregoing, or to the flaw detection in eddy-current testing and magnetic leakage flux testing. The liftoff correction eliminates the influence of the fluctuation in the amount of liftoff due to the fluctuation in tension, the eccentricity of a roll, or a local shape defect, and thus contributes to the measurement of high precision. Moreover, applying the magnetic properties measuring device in the embodiment of the present invention to a manufacturing process enables the magnetic properties of a steel sheet to be correctly measured and a nonconforming area to be reliably detected. The detected defect area will be cutoff, repaired, or marked and then improves the product reliability.

As in the foregoing, the present invention measures the amount of liftoff and makes the output correction, whereby the magnetic properties distribution of a specimen can be measured stably and accurately. Furthermore, the output correction being performed using two output of the normal area and the defect area makes not only that the correction of high accuracy can be made but also the correction value in the embodiment of the present invention itself becomes an index of the degree of defect. Moreover, because it is a two-point calibration method, the measurement can eliminate the influence of output drift or the like.

More specifically, the magnetic properties measuring method in the embodiment of the present invention includes obtaining the relation $L_s(l)$ of the output of the magneto-sensitive element 4 and the amount of liftoff of the magneto-sensitive element 4 at the normal area of the pre-measuring specimen as normal area liftoff data beforehand, obtaining the relation $L_p(l)$ of the output of the magneto-sensitive element 4 and the amount of liftoff of the magneto-sensitive element 4 at the defect area of the pre-measuring specimen as defect area liftoff data beforehand, measuring the output of the magneto-sensitive element 4 at the specimen 10 and the amount of liftoff of the magneto-sensitive element 4 at the time the output is obtained, and performing correction calculation on the output of the magneto-sensitive element 4 measured at the measuring using the normal area liftoff data, the defect area liftoff data, and the amount of liftoff measured at the measuring. Therefore, local magnetic properties distribution of the steel sheet can be measured stably even when the fluctuation occurs in the amount of liftoff caused by the fluctuation in tension of a steel sheet, the eccentricity of a conveying roll, a shape defect of the steel sheet, and others.

Furthermore, in the magnetic properties measuring method according to the embodiment of the present invention, the performing correction calculation includes calculating the relative output of the magneto-sensitive element 4 measured at the measuring with respect to the output of the magneto-sensitive element 4 at the normal area and at the defect area of the pre-measuring specimen when the amount of liftoff of the magneto-sensitive element 4 is the amount of liftoff measured at the measuring. Consequently, the corrected output in the embodiment of the present invention can be used as an index of the degree of defect.

The magnetic properties measuring device in the embodiment of the present invention includes the excitation element 3 that magnetizes the specimen, the magneto-sensitive elements 4 that detect magnetic properties distribution on the specimen 10 induced by the excitation element 3, the distance measuring devices 5 that measure the amount of liftoff between the magneto-sensitive elements 4 and the specimen 10, the storage device 8 that stores therein normal area liftoff data that represents the relation $L_s(l)$ of the output of the magneto-sensitive element 4 and the amount of liftoff of the magneto-sensitive element 4 at the normal area and the defect area liftoff data that represents the relation $L_p(l)$ of the output of the magneto-sensitive element 4 and the amount of liftoff of the magneto-sensitive element 4 at the defect area, and the calculating device 7 that corrects the output of the magneto-sensitive elements 4 using the normal area liftoff data, the defect area liftoff data, and the amount of liftoff measured with the distance measuring devices 5. Therefore, local magnetic properties distribution of the steel sheet can be measured stably even when the fluctuation occurs in the amount of liftoff caused by the fluctuation in tension of a steel sheet, the eccentricity of a conveying roll, a shape defect of the steel sheet, and others.

The pre-measuring specimen in the embodiment of the present invention can calibrate the output of a magneto-sensitive element and a determining threshold with high reproducibility. Furthermore, a defect-area simulant standard calibration sheet of any degree of defect can be made to calibrate, and thus the maximal performance of the magnetic properties measuring device in the embodiment of the present invention can be obtained.

The magnetic properties measuring device in the embodiment of the present invention includes a larger number of the magneto-sensitive elements 4 than the number of the distance measuring devices 5, and the amount of liftoff between the magneto-sensitive element 4 and the specimen 10 is calculated by interpolation using the distance between the distance measuring devices 5 and the specimen 10. Consequently, the necessary layout density of the distance measuring devices 5 can be ensured while a total cost is reduced.

Industrial Applicability

The present invention can be applied to a magnetic properties measuring method and a magnetic properties measuring device that measure local magnetic properties distribution of a steel sheet.

Reference Signs List

1     magnetic properties measuring device
2a    detection head
2b    controller
3     excitation element
4     magneto-sensitive element
5     distance measuring device
6     excitation device
7     calculating device
8     storage device
9     display device
10    specimen

**Claims**

**1.** A magnetic properties measuring method comprising the steps of:

obtaining relation of output of a magneto-sensitive element (4) and an amount of liftoff of the magneto-sensitive element (4) at a normal area of a pre-measuring specimen as normal area liftoff data beforehand;

obtaining relation of the output of the magneto-sensitive element (4) and the amount of liftoff of the magneto-sensitive element (4) at a defect area of the pre-measuring specimen as defect area liftoff data beforehand;

measuring output of the magneto-sensitive element (4) at a specimen (10) and the amount of liftoff of the magneto-sensitive element (4) when the output is obtained; and

performing correction calculation on the output of the magneto-sensitive element (4) measured at the measuring step using the normal area liftoff data, the defect area liftoff data, and the amount of liftoff measured at the measuring step.

2. The magnetic properties measuring method according to claim 1, wherein the performing correction calculation step includes the step of calculating relative output of the magneto-sensitive element (4) measured at the measuring with respect to the output of the magneto-sensitive element (4) at the normal area and at the defect area of the pre-measuring specimen when the amount of liftoff of the magneto-sensitive element (4) is the amount of liftoff measured at the measuring step.

3. The magnetic properties measuring method according to claim 2, wherein the performing correction calculation step includes the step of calculating the output of the magneto-sensitive element (4) when the amount of liftoff of the magneto-sensitive element (4) is at a given value as a correction value using the relative output of the magneto-sensitive element (4).

4. The magnetic properties measuring method according to any one of claims 1 to 3, wherein

the defect area is an area in which a direction of magnetization is different from that of the normal area, and

as the pre-measuring specimen, a normal-area standard calibration sheet (101a) to obtain the normal area liftoff data and a defect-area simulation standard calibration sheet (101b) to obtain the defect area liftoff data are sampled from a normal area of the same steel sheet at different angles from each other.

5. The magnetic properties measuring method according to any one of claims 1 to 3, wherein

the defect area is an area in which a direction of magnetization is different from that of the normal area, and

as the pre-measuring specimen, a normal area of a steel sheet is defined as a normal-area standard calibration sheet (101a) to obtain the normal area liftoff data and the normal-area standard calibration sheet (101a) being rotated to a different angle is defined as a defect-area simulation standard calibration sheet (101b) to obtain the defect area liftoff data.

6. A magnetic properties measuring device (1) comprising:

an excitation element (3) that magnetizes a specimen (10) ;

a magneto-sensitive element (4) that detects magnetic properties distribution on the specimen (10) induced by the excitation element (3);

a distance measuring device (5) that measures an amount of liftoff between the magneto-sensitive element (4) and the specimen (10);

a storage device (8) that stores therein normal area liftoff data that represents relation of output of the magneto-sensitive element (4) and the amount of liftoff of the magneto-sensitive element (4) at a normal area, and defect area liftoff data that represents relation of the output of the magneto-sensitive element (4) and the amount of liftoff of the magneto-sensitive element (4) at a defect area; and

a calculating device (7) that corrects the output of the magneto-sensitive element (4) using the normal area liftoff data, the defect area liftoff data, and the amount of liftoff measured with the distance measuring device (5).

7. The magnetic properties measuring device (1) according to claim 6, wherein

a larger number of the magneto-sensitive elements (4) than that of the distance measuring devices (5) are provided, and

the amount of liftoff between the magneto-sensitive elements (4) and the specimen (10) is calculated by interpolation using a distance between the distance measuring devices (5) and the specimen (10).

**Patentansprüche**

1. Verfahren zum Messen von magnetischen Eigenschaften, die folgenden Schritte umfassend:

vorheriges Erhalten von einer Beziehung einer Ausgabe eines magnetosensitiven Elements (4) und einer Menge eines Abhebens des magnetosensitiven Elements (4) an einem Normalbereich einer Probe für ein Vormessen als Daten eines Normalbereichsabhebens;

vorheriges Erhalten einer Beziehung der Ausgabe des magnetosensitiven Elements (4) und der Menge des Abhebens des magnetosensitiven Elements (4) an einem Defektbereich der Probe für das Vormessen als Daten eines Defektbereichsabhebens;

Messen einer Ausgabe des magnetosensitiven Elements (4) an einer Probe (10) und die Menge eines Abhebens des magnetosensitiven Elements (4), wenn die Ausgabe erhalten wird;

Durchführen von Korrekturberechnungen an der Ausgabe des magnetosensitiven Elements (4), die während des Messschritts gemessen wurde, unter Verwendung der Daten des Normalbereichsabhebens, der Daten des Defektbereichsabhebens und der Menge des Abhebens, die während des Messschritts gemessen wurde.

2. Verfahren zum Messen von magnetischen Eigenschaften nach Anspruch 1, wobei das Durchführen des Korrekturberechnungsschritts einen Schritt des Berechnens einer relativen Ausgabe des magnetosensitiven Elements (4) beinhaltet, die während des Messens mit Bezug zu der Ausgabe des magnetosensitiven Elements (4) an dem Normalbereich und an dem Defektbereich der Probe für das Vormessen gemessen wurde, wenn die Menge eines Abhebens des magnetosensitiven Elements (4) die Menge eines Abhebens ist, die in dem Messschritt gemessen wurde.

3. Verfahren zum Messen von magnetischen Eigenschaften nach Anspruch 2, wobei das Durchführen des Korrekturberechnungsschritts den Schritt des Berechnens der Ausgabe des magnetosensitiven Elements (4), wenn die Menge eines Abhebens des magnetosensitiven Elements (4) bei einem vorgegebenen Wert ist, als einen Korrekturwert unter Verwendung der relativen Ausgabe des magnetosensitiven Elements (4) beinhaltet.

4. Verfahren zum Messen von magnetischen Eigenschaften nach einem der Ansprüche 1 bis 3, wobei der Defektbereich ein Bereich ist, in dem sich eine Magnetisierungsrichtung von der des Normalbereichs unterscheidet, und

als die Probe für das Vormessen eine Normalbereichs-Standardkalibrationsplatte (101a), um die Daten des Normalbereichsabhebens zu erhalten, und eine Defektbereichs-Standardsimulationskalibrationsplatte (101b), um die Daten des Defektbereichsabhebens zu erhalten, von einem Normalbereich der selben Stahlplatte in zueinander unterschiedlichen Winkeln entnommen sind.

5. Verfahren zum Messen von magnetischen Eigenschaften nach einem der Ansprüche 1 bis 3, wobei der Defektbereich ein Bereich ist, in dem sich eine Magnetisierungsrichtung von der des Normalbereichs unterscheidet, und

als die Probe für das Vormessen ein Normalbereich einer Stahlplatte als eine Normalbereichs-Standardkalibrationsplatte (101a) definiert ist, um die Daten des Normalbereichsabhebens zu erhalten, und die Normalbereichs-Standardkalibrationsplatte (101a), die um einen anderen Winkel gedreht ist, als eine Defektbereichs-Standardsimulationskalibrationsplatte (101b) definiert ist, um die Daten des Defektbereichsabhebens zu erhalten.

6. Messeinrichtung (1) für magnetische Eigenschaften, umfassend:

ein Anregungselement (3), das eine Probe (10) magnetisiert;

ein magnetosensitives Element (4), das eine Verteilung magnetischer Eigenschaften an der Probe (10) detektiert, die durch das Anregungselement (3) induziert ist;

eine Abstandsmesseinrichtung (5), die eine Menge eines Abhebens zwischen dem magnetosensitiven Element (4) und der Probe (10) misst;

eine Speichereinrichtung (8), die Daten eines Normalbereichsabhebens speichert, die eine Relations einer Ausgabe des magnetosensitiven Elements (4) und der Menge eines Abhebens des magnetosensitiven Elements (4) an einem Normalbereich darstellen, und Daten eines Defektbereichsabhebens speichert, die eine Relation der Ausgabe des magnetosensitiven Elements (4) und der Menge eines Abhebens des magnetosensitiven Elements (4) an einem Defektbereich darstellt,

eine Berechnungseinrichtung (7), die eine Ausgabe des magnetosensitiven Elements (4) unter Verwendung der Daten des Normalbereichsabhebens, der Daten des Defektbereichsabhebens und der Menge des Abhebens, die mit dem der Abstandsmesseinrichtung (5) gemessen wurde, korrigiert.

7. Messeinrichtung (1) für magnetische Eigenschaften nach Anspruch 6, wobei eine größere Anzahl von magnetosensitiven Elementen (4) als von Abstandsmesseinrichtung (5) bereitgestellt ist, und

die Menge eines Abhebens zwischen den magnetosensitiven Elementen (4) und der Probe (10), durch Interpolation unter Verwendung eines Abstands zwischen der Abstandsmesseinrichtung (5) und der Probe (10) berechnet wird.

## Revendications

1. Procédé de mesure de propriétés magnétiques comprenant les étapes qui consistent :

à obtenir une relation entre une sortie d'un élément magnéto-sensible (4) et une quantité de décollage de l'élément magnéto-sensible (4) au niveau d'une zone normale d'un échantillon de pré-mesure en tant que données de décollage de zone normale à l'avance ;
à obtenir une relation entre la sortie de l'élément magnéto-sensible (4) et la quantité de décollage de l'élément magnéto-sensible (4) au niveau d'une zone de défaut de l'échantillon de pré-mesure en tant que données de décollage de zone de défaut à l'avance ;
à mesurer une sortie de l'élément magnéto-sensible (4) au niveau d'un échantillon (10) et la quantité de décollage de l'élément magnéto-sensible (4) lorsque la sortie est obtenue ; et
à effectuer un calcul de correction sur la sortie de l'élément magnéto-sensible (4) mesurée à l'étape de mesure en utilisant les données de décollage de zone normale, les données de décollage de zone de défaut, et la quantité de décollage mesurée à l'étape de mesure.

2. Procédé de mesure de propriétés magnétiques selon la revendication 1, dans lequel l'étape qui consiste à effectuer le calcul de correction comporte l'étape qui consiste à calculer une sortie relative de l'élément magnéto-sensible (4) mesurée à l'étape de mesure par rapport à la sortie de l'élément magnéto-sensible (4) au niveau de la zone normale et au niveau de la zone de défaut de l'échantillon de pré-mesure lorsque la quantité de décollage de l'élément magnéto-sensible (4) est la quantité de décollage mesurée à l'étape de mesure.

3. Procédé de mesure de propriétés magnétiques selon la revendication 2, dans lequel l'étape qui consiste à effectuer le calcul de correction comporte l'étape qui consiste à calculer la sortie de l'élément magnéto-sensible (4) lorsque la quantité de décollage de l'élément magnéto-sensible (4) est égale à une valeur donnée en tant que valeur de correction en utilisant la sortie relative de l'élément magnéto sensible (4).

4. Procédé de mesure de propriétés magnétiques selon l'une quelconque des revendications 1 à 3, dans lequel la zone de défaut est une zone dans laquelle une direction d'aimantation est différente de celle de la zone normale, et comme étant l'échantillon de pré-mesure, une feuille d'étalonnage standard de zone normale (101a) permettant d'obtenir les données de décollage de zone normale et une feuille d'étalonnage standard de simulation de zone de défaut (101b) permettant d'obtenir les données de décollage de zone de défaut sont échantillonnées à partir d'une zone normale de la même feuille d'acier à des différents angles l'une par rapport à l'autre.

5. Procédé de mesure de propriétés magnétiques selon l'une quelconque des revendications 1 à 3, dans lequel la zone de défaut est une zone dans laquelle une direction d'aimantation est différente de celle de la zone normale, et comme étant l'échantillon de pré-mesure, une zone normale d'une feuille d'acier est définie en tant que feuille d'étalonnage standard de zone normale (101a) permettant d'obtenir les données de décollage de zone normale et la feuille d'étalonnage standard de zone normale (101a) étant mise en rotation à un angle différent est définie en tant que feuille d'étalonnage standard de simulation de zone de défaut (101b) permettant d'obtenir les données de décollage de zone de défaut.

6. Dispositif de mesure de propriétés magnétiques (1) comprenant :

un élément d'excitation (3) qui aimante un échantillon (10) ;
un élément magnéto-sensible (4) qui détecte une distribution de propriétés magnétiques sur l'échantillon (10) induit par l'élément d'excitation (3) ;
un dispositif de mesure de distance (5) qui mesure une quantité de décollage entre l'élément magnéto-sensible (4) et l'échantillon (10) ;
un dispositif de stockage (8) qui y stocke des données de décollage de zone normale qui représentent une relation entre une sortie de l'élément magnéto-sensible (4) et la quantité de décollage de l'élément magnéto-sensible (4) au niveau d'une zone normale, et des données de décollage de zone de défaut qui représentent une relation entre la sortie de l'élément magnéto-sensible (4) et la quantité de décollage de l'élément magnéto-sensible (4) au niveau d'une zone de défaut ; et
un dispositif de calcul (7) qui corrige la sortie de l'élément magnéto-sensible (4) en utilisant les données de décollage de zone normale, les données de décollage de zone de défaut, et la quantité de décollage mesurée avec le dispositif de mesure de distance (5).

7. Dispositif de mesure de propriétés magnétiques (1) selon la revendication 6, dans lequel
un nombre d'éléments magnéto-sensibles (4) plus important que celui des dispositifs de mesure de distance (5) est prévu, et
la quantité de décollage entre les éléments magnéto-sensibles (4) et l'échantillon (10) est calculée par interpolation en utilisant une distance entre les dispositifs de mesure de distance (5) et l'échantillon (10).

# FIG.1

# FIG.2

# FIG.3

REFERENCE
LIFTOFF
I=ref

LIFTOFF AT
MEASURED TIME

OUTPUT

CORRECTED
OUTPUT y

OUTPUT x

DEFECT AREA
OUTPUT: $L_p(I)$

RELATIVE OUTPUT X

NORMAL AREA
OUTPUT: $L_s(I)$

LIFTOFF

# FIG.4

ROLLING
DIRECTION A

DEFECT-AREA
SIMULATION
STANDARD
CALIBRATION
SHEET

S

NORMAL-AREA
STANDARD
CALIBRATION
SHEET

101a          101b

101

# FIG.5

WITHOUT LIFTOFF
CORRECTION
WITH LIFTOFF
CORRECTION
LIFTOFF AMOUNT

SENSOR OUTPUT
[ARBITRARY UNIT]

LIFTOFF AMOUNT
[ARBITRARY UNIT]

0ch  2ch  4ch  6ch  8ch  10ch  12ch  14ch  16ch  18ch

# FIG.6

LIFTOFF
OUTPUT
(WITHOUT CORRECTION)

SENSOR OUTPUT
[ARBITRARY UNIT]

LIFTOFF AMOUNT
[ARBITRARY UNIT]

$\Delta A$

$\Delta B$

A

B

COIL POSITION IN LONG DIRECTION
[ARBITRARY UNIT]

# FIG.7

SENSOR OUTPUT [ARBITRARY UNIT]

OUTPUT (WITHOUT CORRECTION)
OUTPUT (WITH CORRECTION)

SENSOR OUTPUT [ARBITRARY UNIT]

COIL POSITION IN LONG DIRECTION
[ARBITRARY UNIT]

# FIG.8

OUTPUT (WITH CORRECTION)
OUTPUT (WITHOUT CORRECTION)
LIFTOFF

DEFECT AREA b

DEFECT AREA a

DEFECT AREA c

DEFECT AREA d

DEFECT THRESHOLD

SENSOR OUTPUT [ARBITRARY UNIT]

SENSOR OUTPUT [ARBITRARY UNIT]

COIL POSITION IN LONG DIRECTION
[ARBITRARY UNIT]

**EP 2 717 042 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61170068 A
- JP 2007057245 A
- JP 8145952 A
- JP 2001056317 A